(19)

Europäisches Patentamt

European Patent Office

Office européen des brevets

(11) EP 4 729 209 A1

## (12) EUROPEAN PATENT APPLICATION

(43) Date of publication:
22.04.2026  Bulletin 2026/17

(21) Application number: 24213623.2

(22) Date of filing: 18.11.2024

(51) International Patent Classification (IPC):
**B22F 10/28** (2021.01)   **B22F 10/36** (2021.01)
**B22F 10/64** (2021.01)   **B22F 10/66** (2021.01)
**B33Y 10/00** (2015.01)   **B33Y 80/00** (2015.01)
**C21D 1/25** (2006.01)   **C21D 1/60** (2006.01)
**C21D 1/74** (2006.01)   **C21D 6/00** (2006.01)
**C21D 8/00** (2006.01)   **C21D 9/00** (2006.01)
**B21D 22/00** (2006.01)   **B21D 37/01** (2006.01)
**B22F 5/00** (2006.01)   C22C 38/14 (2006.01)
B22F 3/24 (2006.01)   C22C 38/10 (2006.01)
C22C 33/02 (2006.01)   B23P 15/24 (2006.01)
C22C 38/08 (2006.01)

(52) Cooperative Patent Classification (CPC):
(C-Sets available)
**B33Y 10/00; B22F 10/28; B22F 10/36; B22F 10/64;
B22F 10/66; B23P 15/24; B33Y 80/00; C21D 1/25;
C21D 1/60; C21D 1/74; C21D 6/001; C21D 6/007;
C21D 8/00; C21D 9/0068;** B22F 10/32;   (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **17.10.2024  PL 45005924**

(71) Applicant: **Akademia Gorniczo-Hutnicza im.
Stanislawa
Staszica w Krakowie
30-059 Krakow (PL)**

(72) Inventors:
• **Zaba, Krzysztof**
  **31-751 Kraków (PL)**
• **Wiewióra, Marcel**
  **38-204 Tarnowiec (PL)**
• **Balcerzak, Maciej**
  **31-341 Kraków (PL)**
• **Kuczek,  ukasz**
  **32-002 Kokotów (PL)**

(74) Representative: **Kuczynska, Teresa et al
Polservice
Kancelaria Rzecznikow
Patentowych Sp. z o.o.
Bobrowiecka 8
00-728 Warszawa (PL)**

(54) **MANUFACTURING METHOD OF TOOLS WITH WORKING LAYER PREPARED WITH 3D PRINTING TECHNOLOGY OF METAL AND A METAL TOOL MANUFACTURED WITH SAID METHOD**

(57)    Method of manufacturing tools with a working layer prepared from metal with a 3D printing technology, according to the invention is characterised in that a base plate made of structural steel, preferably a S235, is mounted within a workspace of a 3D printer, then a printer chamber is purged with argon with simultaneous measurement of oxygen concentration in the printer chamber until the oxygen concentration in the printer chamber reaches below 0.02% with simultaneous heating of the plate to temperature of 100°C, then with use of laser with power ranging from 80 to 120 Watts, with scanning speed of 400 to 600 mm/s, with spot size of 0.1 mm and with a single layer thickness of 0.03 mm, components of a specified geometry and overall dimensions not exceeding values of 100x100x100 mm are printed, wherein, in order to achieve appropriate welding of the working layer to the base, three to five initial layers of the printed component are each scanned with a laser in triplicate, while the following layers of powder feed are scanned once, and in addition printing of the following layers is performed with the rotation of the scanning laser path by 67°, then printed component together with the shaft part made of structure steel is heat treated in temperature of 800 to 850°C in the argon protective atmosphere for time period ranging from 1 to 4 hours depending on the overall dimensions, then heat treated component is rapidly cooled down in water which initial temperature is in range of 18 to 25 °C while swirling the water until the component

EP 4 729 209 A1

reaches a room temperature, then the component is subjected to aging process at temperature from 530 to 570 °C for period of time from 1 to 2 hours in the argon protective atmosphere and is air cooled.

Hybrid metal tool according to the invention is characterized in that it comprises a base part having a cylindrical shape of overall dimensions not exceeding 100x100x100 mm that was manufactured by machining method from structural steel, for example S235, and working part manufactured on the surface of the base part by 3D printing with DMLS method from Maraging M300 steel of overall dimensions not exceeding 100x100x100 mm, having relative porosity not exceeding 0.5%, hardness in range of 50-60 HRC (500-700 HV), and of roughness parameter Ra achieved after 3D printing with DMLS method ranging from 2.5 do 10 μm.

Working part 3D printed

Base plate

Fig. 6

(52) Cooperative Patent Classification (CPC): (Cont.)
B22F 2003/248; B22F 2005/002; C22C 33/0285;
C22C 38/004; C22C 38/02; C22C 38/04;
C22C 38/105; C22C 38/12; C22C 38/14;
C22C 38/44; C22C 38/50; C22C 38/52

C-Sets
B22F 2999/00, B22F 10/32, B22F 2201/11;
B22F 2999/00, B22F 2005/002, B22F 3/177;
B22F 2999/00, B22F 2005/002, B22F 7/08,
B22F 7/06;
B22F 2999/00, B22F 2005/002, B22F 10/28;
B22F 2999/00, B22F 2005/002, C22C 33/0285

**Description**

The subject of the invention is a manufacturing method of tool with a working surface made with 3D technology from metal and a meta tool manufactured with said method.

The invention concerns powder metallurgy area, in particular metal sheet forming, particularly in the aerospace, automotive, construction, and food industries, especially for the plastic forming of sheets made from alloys of Fe, Cu, Al, Ni, Ti, among others, both cold and hot. The invention is intended for manufacturing products with dimensions (excluding height) not exceeding 100x100 mm

Currently applied methods for manufacturing tools, including dies and punches for the sheet metal stamping process, require many operations such as cutting the blank, milling the blank, grinding the blank, heat treatment of the blank, re-grinding the blank, electrical discharge machining, and locksmithing operations. These processes are time-consuming, require special setups, and involve many workers. Additionally, the processes of grinding, turning, milling, and electrical discharge machining are subtractive processes. As a result, the material for the blank must account for material allowances that are removed in subsequent operations.

The application of 3D printing significantly shortens the production time for comparable components compared to conventional methods and greatly reduces material waste, which is often recycled and can be reused in the form of powder for 3D printing.

Methods for applying metal powder using 3D printing technology are also known, even in the case of tool manufacturing. For example, the patent document KR102002003B1 describes a device for uniformly coating mixed powders intended for sintering with metal powders for a 3D printer. This device applies the powder in several stages to achieve uniform coating with mixed metal powders using a 3D printer.

The document CN113891956A discloses a system for manufacturing drilling tools that includes a reactor for molecular layer deposition or atomic layer deposition of metal powder to create coated particles, a production unit configured for 3D printing the tool, and a controller that manages the deposition.

The document CN 109940163A reveals a finishing method for enhancing the wear resistance of metal parts in 3D printing technology.

The document CN116140650A discloses a printing device for laying down metal powder and its operational method. The printing device for laying down metal powder consists of a frame, a laser, a powder application module, and a printing platform.

Additionally, the document CN108907095A describes a method for rapid casting of large precision castings based on 3D printing technology.

The method of 3D printing finished products or semi-finished products from tool steel (e.g., M300) is also known from non-patent publications. The conditions for 3D printing of maraging steel are presented in the following articles: B. Mooney, K. Kourousis, "A Review of Factors Affecting the Mechanical Properties of Maraging Steel 300 Fabricated via Laser Powder Bed Fusion," Metals 10 (2020) 1273; H.E. Petersen, B J. Sampson, D.P. Failla Jr., M.W. Priddy, Z.B. McClelland, "The Variation of Mechanical Properties of M300 Maraging Steel Manufactured with Varying Process Parameters in Laser Powder Bed Fusion," in: Solid Freeform Fabrication Symposium - An Additive Manufacturing Conference, Austin, Texas USA, 2023; N. Rońda, K. Grzelak, M. Polański, J. Dworecka-Wójcik, "The Influence of Layer Thickness on the Microstructure and Mechanical Properties of M300 Maraging Steel Additively Manufactured by LENS® Technology," Materials 15 (2022) 603; J. Vishwakarma, K. Chattopadhyay, N.C. Santhi Srinivas, "Effect of build orientation on microstructure and tensile behaviour of selectively laser melted M300 maraging steel," Materials Science and Engineering: A 798 (2020) 140130; B. Podgornik, M. Šinko, M. Godec, "Dependence of the wear resistance of additive-manufactured maraging steel on the build direction and heat treatment," Additive Manufacturing 46 (2021) 102123; E.W. Hovig, A.S. Azar, K. Solberg, K. Sørby, "An investigation of the anisotropic properties of heat-treated maraging steel grade 300 processed by laser powder bed fusion," Int J Adv Manuf Technol 114 (2021) 1359-1372. Special attention was paid to energy density and its impact on the properties of the product. In all cases, the component was printed on a steel substrate, from which it was subsequently cut off.

The technology for 3D printing components from tool steel and the most favorable conditions for heat treatment aimed at achieving the highest possible hardness are presented in the following works: J. Vishwakarma, K. Chattopadhyay, N.C. Santhi Srinivas, "Effect of build orientation on microstructure and tensile behaviour of selectively laser melted M300 maraging steel," Materials Science and Engineering: A 798 (2020) 140130; B. Podgornik, M. Šinko, M. Godec, "Dependence of the wear resistance of additive-manufactured maraging steel on the build direction and heat treatment," Additive Manufacturing 46 (2021) 102123; S. Kolomy, J. Sedlak, J. Zouhar, M. Slany, M. Benc, D. Dobrocky, I. Barenyi, J. Majerik, "Influence of Aging Temperature on Mechanical Properties and Structure of M300 Maraging Steel Produced by Selective Laser Melting," Materials 16 (2023) 977. In the case of M300 maraging steel, a hardness level of approximately 58 HRC was achieved, which meets the requirements for tools intended for stamping.

The article (N. Asnafi, J. Rajalampi, D. Aspenberg, A. Alveflo, "Production Tools Made by Additive Manufacturing Through Laser-based Powder Bed Fusion," Berg Huettenmaenn Monatsh 165 (2020) 125-136) demonstrates the method of producing single-point bending and cutting tools (dies and punches) using 3D printing technology with tool steel powders DIN 1.2707 (M300) and Uddeholm Corrax. The tools were entirely manufactured using the SLM (Selective Laser Melting) 3D printing technology.

The article (C.-P. Jiang, A.A. Maidhah, S.-H. Wang, Y.-R. Wang, T. Pasang, M. Ramezani, "Laser Powder Bed Fusion of Inconel 718 Tools for Cold Deep Drawing Applications: Optimization of Printing and Post-Processing Parameters," Materials 16 (2023) 4707) presents the method of producing tools for deep drawing cylindrical cups based on 3D printing technology using LPBF (Laser Powder Bed Fusion). The working parts were fully manufactured using 3D printing with Inconel 718 and assembled onto previously prepared plates using traditional methods (machining).

The technology of Laser Direct Metal Deposition (LDMD) is also known, which enables the manufacturing of tools for plastic forming on a steel substrate (H. Freiße, J. Vorholt, T. Seefeld, F. Vollertsen, "Additive Manufacturing of a Deep Drawing Tool by Direct Laser Deposition," Dry Metal Forming Open Access Journal 1 (2015) 5-10). The article (H. Dardaei Joghan, R. Hölker-Jäger, A. Komodromos, A.E. Tekkaya, "Hybrid Additive Manufacturing of Forming Tools," Automot. Innov. 6 (2023) 311-323) showcases the technology for producing entire or partially additive manufactured tools for plastic forming, primarily for stamping tools. It describes the creation of hybrid dies, consisting mainly of a large machined chamber die component and a small component made using AM technologies (SLM, LDMD).

In plastic forming processes, one of the fundamental issues is the durability of the tools, which, in addition to high dimensional and shape accuracy, should ensure the achievement of appropriate product quality over a long operational period. In the heterogeneous system of tool- sheet-lubricating medium, various phenomena occur, including adhesive wear at the contact surfaces of the tools and the shaped sheet, abrasive wear caused by the presence of contaminants on the sheet surface and wear products, as well as fatigue wear resulting from cyclic and varying pressures and temperatures over time. Due to the complexity of the tool deterioration mechanism, a quantitative description of these processes is very difficult and of limited use for engineering design of plastic forming processes. A practical method for limiting excessive tool wear is the application of high-performance protective coatings on the tools and the introduction of tools made from non-metallic materials, including elastomeric and composite materials. In each of these cases, technologically advanced lubricants that are resistant to mechanical and thermal stresses play a crucial role, tailored to individual processing conditions. Currently used technological processes for shaping sheets to produce parts for industries such as aerospace and automotive employ conventional tool steels as the material for the tools. However, due to the wide range of production, relatively short tool lifespan, and high costs of manufacturing and refurbishing them, a more appropriate solution is the production of working parts of tools tailored to current production needs, for example, by utilizing metal 3D printing technology (e.g., SLM, SLS). Tools manufactured according to this invention can be used for the plastic forming of sheets made from alloys of Fe, Cu, Al, Ni, Ti, and others. The invention pertains to tools designed for the production of stampings with dimensions not exceeding 100x100x100 mm.

The problem that this invention aims to address is therefore to propose a method for manufacturing durable tools with high dimensional and shape accuracy, which will ensure the achievement of appropriate product quality over a long operational period, as well as to create such tools.

Method of manufacturing tools with a working layer prepared from metal with a 3D printing technology, according to the invention is characterised in that a base plate made of structural steel, preferably a S235, is mounted within a workspace of a 3D printer, then a printer chamber is purged with argon with simultaneous measurement of oxygen concentration in the printer chamber until the oxygen concentration in the printer chamber reaches below 0.02% with simultaneous heating of the plate to temperature of 100°C, then with use of laser with power ranging from 80 to 120 Watts, with scanning speed of 400 to 600 mm/s, with spot size of 0.1 mm and with a single layer thickness of 0.03 mm, components of a specified geometry and overall dimensions not exceeding values of 100x100x100 mm are printed, wherein, in order to achieve appropriate welding of the working layer to the base, three to five initial layers of the printed component are each scanned with a laser in triplicate, while the following layers of powder feed are scanned once, and in addition printing of the following layers is performed with the rotation of the scanning laser path by 67°, then printed component together with the shaft part made of structure steel is heat treated in temperature of 800 to 850°C in the argon protective atmosphere for time period ranging from 1 to 4 hours depending on the overall dimensions, then heat treated component is rapidly cooled down in water which initial temperature is in range of 18 to 25 °C while swirling the water until the component reaches a room temperature, then the component is subjected to aging process at temperature from 530 to 570 °C for period of time from 1 to 2 hours in the argon protective atmosphere and is air cooled.

Advantageously, a base plate that is mounted in the workspace of 3D printer is in form of a solid plate of structural steel, from which after printing of the working layer made of structural steel the tools with printed working layer made of structural steel are cut out. Advantageously in the workspace of 3D printer a base plate with specifically cut holes for finished base parts made of structural steel is mounted, then inside these holes a finished base parts made of structural steel are placed on which a working layer of tools is printed. Hybrid metal tool according to the invention is characterized in that it comprises a base part having a cylindrical shape of overall dimensions not exceeding 100x100x100 mm that was manufactured by machining method from structural steel, for example S235, and working part manufactured on the surface of the base part by 3D printing with DMLS method from Maraging M300 steel of overall dimensions not exceeding 100x100x100 mm, having relative porosity not exceeding 0.5%, hardness in range of 50-60 HRC (500-700 HV), and of roughness parameter Ra achieved after 3D printing with DMLS method ranging from 2.5 to 10 μm.

The subject of the invention in exemplary embodiments was shown in attached drawing on which Fig. 1. shows a base plate as a solid plate, Fig. 2 shows an example of the tool printed in a DMLS technology, Fig. 3 shows the base plate with the holes for mounting the base part, Fig. 4 shows an example of the base part of the tool, Fig. 5 shows an example of the working part of the tool, Fig. 6 shows the printed components on the solid base plate, Fig. 7 shows an example of embodiment of a stamp that comprises the base part on which the working part of the tool is permanently printed.

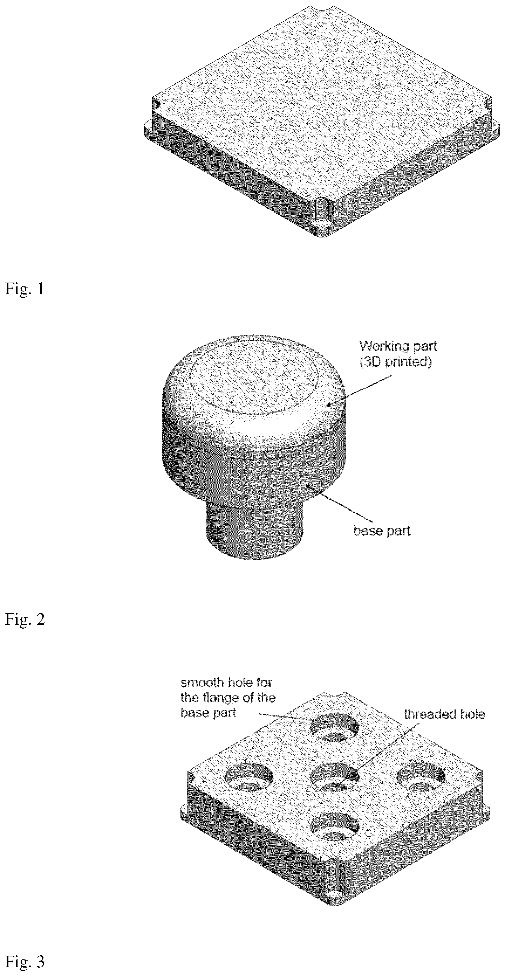

Fig. 1. show the base plate as the solid plate that is used as the base on which the working part of the sheet forming tool is permanently printed. The plate has a shape of a flat cuboid, preferably with a square base, for example with dimensions of 137.50 x 137.50 x 19 mm

Fig. 2 shows an exemplary embodiment of the tool that was printed in a DMLS technology used for sheet forming, comprising of the base part that has a cylindrical shape and the working part of the tool having cylindrical shape with curved edges with radius equal to 4.5 mm and thickness of 6 mm. The threaded shaft is made with machining technology to a specific diameter, depending from the applied metric thread, and then threaded.

Fig. 3 shows the base plate as the plate with the holes used for mounting the base part by screwing the threaded shaft in the threaded hole and on that base part the working part of the sheet forming tool is permanently printed. The plate has a shape of a flat cuboid, advantageously of a square base, with dimension of in example 137.50 x 137.50 x 19 mm.

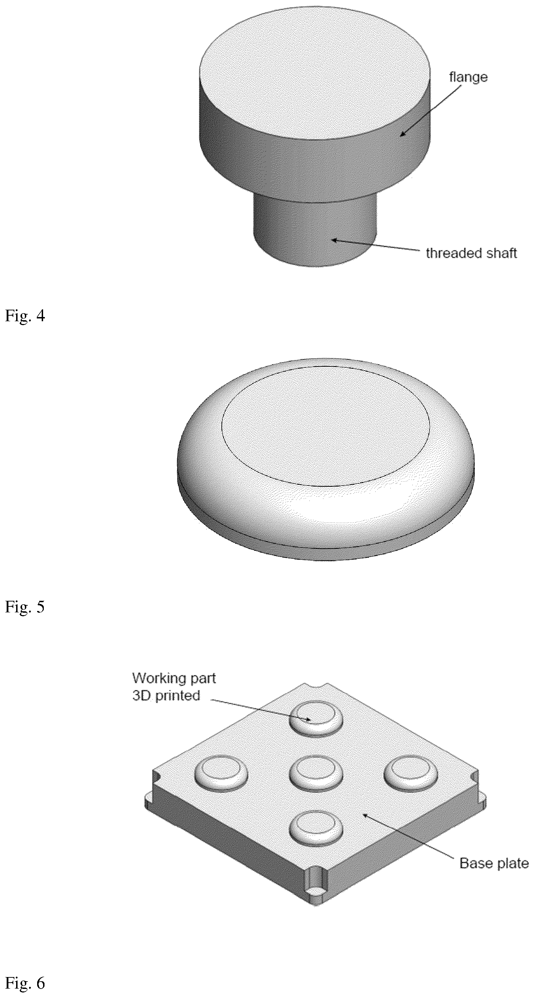

Fig. 4 shows an example of the base part of the tool of cylindrical shape with indication of the flange and the threaded shaft.

Fig. 5 shows an example of the working part of the tool with a cylindrical shape with curved edges.

Fig. 6 shows the elements printed on the solid base plate

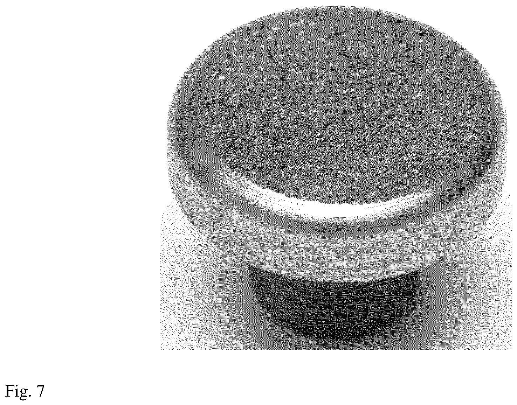

Fig. 7 shows an exemplary embodiment of the stamp that comprises the base part made of S235 steel, on which the working part of the sheet forming tool made of a M300 tool steel is permanently printed.

The manufacturing method of tools with the metal working layer prepared with the 3D printing technology is as follows:

- in the workspace of the 3D printer, depending on the need, either the solid plate made of structural steel as shown in Fig. 1 is mounted, from which the tools with the printed working part made of tool steel as shown in Fig. 2 are cut out after the printing stage, or the plate as shown in Fig. 3 with appropriately cut holes is mounted to accommodate the finished base parts made of structural steel, shown in Fig. 4, on which the working part of the tool, shown in Fig. 5, is printed.
- the printer chamber is purged with a constant stream of argon with simultaneous measurement of the oxygen concentration in the chamber, wherein at the moment the concentration of the oxygen in the chamber is less then 0.02% the metal 3D printing process is started,
- then the components as shown in fig. 6 and 7 of arbitrary geometry and overall size that does not exceed 100x100x100 mm are printed with use of a laser with power of 80-120 W, laser spot size equal to 0.1 mm, with scanning speed of 400-600 mm/s, thickness of a single layer of print equal to 0.03 mm and energy density of 8-80 $J/mm^3$,
- in order to better weld the working layer to the base part, three to five initial layers of the printed component are scanned each with the laser in triplicate, while the following layers of the powder feed as scanned once,
- printing of the following layers is performer with rotation of the scanning laser path by 67°,
- afterwards, in case the working part is printed on the solid plate then the tools as shown in Fig. 2 with the printed working part made of tool steel are cut out,
- the printed component with the base part made out of structural steel are heat treated at temperature ranging from 800 to 850°C in argon protective atmosphere for 1 to 4 hours depending on the overall size,
- afterwards the heat treated component is rapidly cooled down (supersaturated) in water of initial temperature ranging between 18 and 25 °C (with swirling) up until the product reaches room temperature,
- then component is heat treated again at temperature ranging from 530 to 570 °C for 1 to 4 hours in argon protective atmosphere and cooled down in air,
- afterwards the component, in particular its working part is subjected to the final surface treatment in the form of grinding, polishing, or sandblasting to obtain the tool shown in Fig. 7.

As described above, the tools in this invention feature the working part manufactured using 3D printing technology based on selective laser melting of powder. Metal layers of a specified thickness are printed onto the pre-prepared base surface of the tool, which is treated with processes such as sandblasting and grinding, and then undergoes final mechanical and thermal treatment. Tools with a functional coating, made using 3D printing technology, have improved friction and wear properties, resulting in enhanced hardness. This increases wear resistance by at least 10% compared to conventional tools. Additionally, the 3D printing method allows for the creation of an optimal surface morphology, which increases the oil volume in the metal-tool contact area, thus improving the tribological operating conditions during plastic forming.

An important advantage of this invention is the enhanced control over the process. The layers applied through 3D printing according to this invention exhibit increased hardness due to the use of selective laser sintering (SLS) of metal powders, which imparts exceptionally high final properties to the processed materials. The 3D printing technology allows for flexible design of product morphology, enabling control over the properties of the final products. A significant advantage of this technology is the ability to control the morphology and texture of the layer directly from the 3D printing process design software. Achieving the desired surface morphology will increase the oil volume in the metal-tool contact area, thereby improving the tribological conditions during plastic forming with tools coated through 3D printing.

The high level of process control, including individual layer thickness and sintering power, presents a considerable advantage of this invention over conventional methods for producing coatings on stamping tools.

The working parts manufactured using 3D metal printing technology are characterized by a multi-layer structure and controlled porosity, achieved by adjusting the 3D printing parameters (such as temperature, sintering speed, the amount of powder introduced to the sintering zone per cycle, and powder granularity). This structure allows for an increased amount of lubricant in the deformation zone, which reduces the friction coefficient between the surface coating and the surface of the material being shaped, thereby decreasing tool wear. Currently, the friction coefficient for a tool steel-to-Al alloy sheet pair ranges from 0.4 to 0.7 without lubrication and from 0.1 to 0.4 with lubrication, depending on the unit pressure, while maintaining constant sheet surface roughness.

As a result, products exhibit improved surface quality (tribological effect), enhanced consistency (increased tool lifespan and stability of process parameters), and reduced production costs.

The base part of the tool is made from structural steel, such as S235, while the working part is made from Maraging M300 steel powder (Table 1), with a powder particle size of 20-90 $\mu$m (median 45 $\mu$m). The working part is produced using an XactMetal 3D printer, model XM200C-ER.

Table. 1. Chemical composition of the powder used to manufacture of the materials made out of Maraging M300 steel (provided in the table are the ranges of mass fraction of a given component in steel)

| C | Si | Mn | Cr | Mo | Ni | Ti | Co | S max | P max | Fe |
|---|----|----|----|----|-----|-----|------|-------|-------|------|
| 0.00 0.03 | 0.00 0.10 | 0.00 0.15 | 0.00 0.25 | 4.50 5.20 | 17.00 19.00 | 0.80 1.20 | 8.50 10.00 | - 0.010 | - 0.010 | rest |

Present invention may find its application among others in aviation industry, automotive industry, construction and food industry by plastic forming of sheets made of alloys such as Fe, Cu, Al, Ni, Ti both cold and hot. The invention is designated to be used o products that has overall dimensions (without height) not exceeding 100 x 100 mm.

The proposed method enables the production of working components of a stamping tool, such as the die and punch, using 3D metal printing technology. Selecting the appropriate parameters for the 3D metal printing process allows for the manufacturing of tools in significantly less time than conventional methods, while also reducing material waste typically generated by processes such as turning or milling.

The advantages of the invention include a shorter production time for creating tools, especially prototypes, compared to conventional methods, reduced material waste, the ability to repair or refurbish tools, and optimized use of personnel and material resources compared to traditional methods.

Exemplary embodiments of the method according to the invention

Embodiment 1:

To the working chamber of the 3D printer the solid base plate of dimensions equal to 135.5 x 135.5 x 20 mm made out of structural steel S235 is mounted, the chamber is then closed and the argon gas is inserted with the flow rate that is controlled automatically by a device, wherein simultaneously the oxygen concentration in the chamber is measured and as soon as the oxygen content falls below 0.02% the 3D printing process of the tool working part of a cylindrical shape with a diameter of 30 mm and thickness of 0.5 mm with curved edges of 0.5 mm radius is started. The printing is carried out based on the scanning path determined with a slicer by slicing of earlier prepared CAD model with use of a single laser with 120 W power with the scanning speed of 600 mm/s, spot diameter of 0.1 mm and single layer thickness of 0.03 mm, wherein the initial 3 layers are each scanned in triplicate, while the following layers are scanned once. After printing, the tool is cut out with electrical discharge machine and the shaft is machined using cutting process (turning) and threaded with metric M10 die. The elements are heat treated in an furnace in 840 °C for 1 hour in presence of Ar protective atmosphere, rapid cooling in water at 20 °C and then aging by heat treating again at 550 °C for 2 hours in presence of argon. Afterwards the product is air cooled down until it reaches room temperature.

Resulted product has within its working part relative density equal to 99,5% and average hardness equal to 60.1 HRC.

Embodiment 2:

To the working chamber of 3D printer the base plate made of structural steel S235 of dimensions 135.5x135.5x30 mm with holes of diameter $30^{+0.1}_{0}$ is mounted and in the holes of said plate base components of external flange diameter of $30^{0}_{-0.1}$ mm and thickness of 15 mm are placed by screwing the threaded shaft of the base part of 13 mm in height inside the threaded hole of 15 mm in depth and M10 metric thread, after which the printers chamber is closed and argon gas is inserted with automatically controlled flow rate with a device and simultaneously the concentration of oxygen in the chamber is measured, when the oxygen concentration falls below 0.02% the 3D printing process of the working part of cylindrical shape of 30 mm diameter and 6 mm thickness with curved edges of 4.5 mm radium is starting. Printing is carried out based on scanning path determined by slicing with a slicer of earlier prepared CAD model with use of a single laser of 100 W power, scanning speed of 600 mm/s, average spot of 0.1 mm and thickness of a single layer 0.03 mm, wherein, three initial layers are each scanned in triplicate, while the following layers are single scanned. The printout is subjected to the heat treatment by heating in a furnace at temperature of 840 °C for 1 hour in presence of Ar protective atmosphere, rapid cooling in water at temperature of 20 °C, and then aging by heat treating again in temperature of 550 °C for 2 hours in presence of argon. After heat treatment, product is cooled down in air until reaching room temperature.

Resulted with this method product has relative density equal to 99.1% and average hardness equal to 58.4 HRC.

Table 2. Exemplary conditions of the manufacturing methods of the tool with a working part printed on the base part made of structural steel.

| No. | Base Part Material | 3D printing conditions | Annealing conditions |
|---|---|---|---|
| 1 | Structural Steel S235 | Laser power: 100 W<br>Laser spot diameter: 0.1 mm<br>Scanning speed: 600 mm/s<br>Single layer thickness: 0.03 mm<br>Protective atmosphere: Ar | Supersaturation: 840°C / 1h, Ar, water<br><br>Aging: 550°C / 2h, Ar, air |
| 2 | Structural Steel S235 | Laser power: 100 W<br>Laser spot diameter: 0.1 mm<br>Scanning speed: 600 mm/s<br>Single layer thickness: 0.03 mm<br>Protective atmosphere: Ar | Supersaturation: 840°C / 1h, Ar, water<br><br>Aging: 550°C / 4h, Ar, air |
| 3 | Structural Steel S235 | Laser power: 80 W<br>Laser spot diameter: 0.1 mm<br>Scanning speed: 600 mm/s<br>Single layer thickness: 0.03 mm<br>Protective atmosphere: Ar | Supersaturation: 840°C / 1h, Ar, water<br><br>Aging: 550°C / 2h, Ar, air |
| 4 | Structural Steel S235 | Laser power: 120 W<br>Laser spot diameter: 0.1 mm<br>Scanning speed: 600 mm/s<br>Single layer thickness: 0.03 mm<br>Protective atmosphere: Ar | Supersaturation: 840°C / 1h, Ar, water<br><br>Aging: 550°C / 2h, Ar, air |

Table 3. Rockwell hardness values for exemplary components manufactured with 3D printing technology in comparison to steel typically used for tools.

| Material | Rockwell hardness HRC |
|---|---|
| M300 Steel - no. 1 (according to table 2) | 58.4 |
| M300 Steel - no. 2 (according to table 2) | 57.1 |

(continued)

| Material | Rockwell hardness HRC |
| --- | --- |
| M300 Steel - no. 3 (according to table 2) | 56.7 |
| M300 Steel - no. 4 (according to table 2) | 60.1 |
| NMV Steel | 58 - 62 |
| NC6 Steel | 58 - 62 |
| NC11LV Steel | 58 - 62 |

**Claims**

1.  Method of manufacturing tools with a working layer prepared from metal with a 3D printing technology, **characterised in that** a base plate made of structural steel, preferably a S235, is mounted within a workspace of a 3D printer, then a printer chamber is purged with argon with simultaneous measurement of oxygen concentration in the printer chamber until the oxygen concentration in the printer chamber reaches below 0.02% with simultaneous heating of the plate to temperature of 100°C, then with use of laser with power ranging from 80 to 120 Watts, with scanning speed of 400 to 600 mm/s, with spot size of 0.1 mm and with a single layer thickness of 0.03 mm, components of a specified geometry and overall dimensions not exceeding values of 100x100x100 mm are printed, wherein, in order to achieve appropriate welding of the working layer to the base, three to five initial layers of the printed component are each scanned with a laser in triplicate, while the following layers of powder feed are scanned once, and in addition printing of the following layers is performed with the rotation of the scanning laser path by 67°, then printed component together with the shaft part made of structure steel is heat treated in temperature of 800 to 850°C in the argon protective atmosphere for time period ranging from 1 to 4 hours depending on the overall dimensions, then heat treated component is rapidly cooled down in water which initial temperature is in range of 18 to 25 °C while swirling the water until the component reaches a room temperature, then the component is subjected to aging process at temperature from 530 to 570 °C for period of time from 1 to 2 hours in the argon protective atmosphere and is air cooled.

2.  Method according to claim 1 **characterized in that** a base plate that is mounted in the workspace of 3D printer is in form of a solid plate of structural steel, from which after printing of the working layer made of structural steel the tools with printed working layer made of structural steel are cut out.

3.  Method according to claim 1 **characterized in that** in the workspace of 3D printer a base plate with specifically cut holes for finished base parts made of structural steel is mounted, then inside these holes a finished base parts made of structural steel are placed on which a working layer of tools is printed.

4.  Hybrid metal tool **characterized in that** it comprises a base part having a cylindrical shape of overall dimensions not exceeding 100x100x100 mm that was manufactured by machining method from structural steel, for example S235, and working part manufactured on the surface of the base part by 3D printing with DMLS method from Maraging M300 steel of overall dimensions not exceeding 100x100x100 mm, having relative porosity not exceeding 0.5%, hardness in range of 50-60 HRC (500-700 HV), and of roughness parameter Ra achieved after 3D printing with DMLS method ranging from 2.5 do 10 μm.

Fig. 1

Working part
(3D printed)

base part

Fig. 2

smooth hole for
the flange of the
base part

threaded hole

Fig. 3

flange

threaded shaft

Fig. 4

Fig. 5

Working part
3D printed

Base plate

Fig. 6

Fig. 7

Europäisches
Patentamt

European
Patent Office

Office européen
des brevets

## EUROPEAN SEARCH REPORT

**Application Number**

EP 24 21 3623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Data Sheet: "Maraging steel M300 powder for additive manufacturing", , 1 July 2017 (2017-07-01), pages 1-2, XP093276854, Retrieved from the Internet: URL:https://www.renishaw.com/resourcecentre/download/data-sheet-maraging-steel-m300-for-400-w-powder-for-additive-manufacturing--96326?userLanguage=de&#:~:text=Material%20description&text=Nickel%20is%20the%20main%20alloying,commonly%20referred%20to%20as%201.2709. | 4 | INV. B22F10/28 B22F10/36 B22F10/64 B22F10/66 B33Y10/00 B33Y80/00 C21D1/25 C21D1/60 C21D1/74 C21D6/00 C21D8/00 C21D9/00 |
| Y | * abstract; table 1 * <br> * page 2; table 3 * <br> * page 2; table 4 * <br> ----- | 4 | B21D22/00 B21D37/01 B22F5/00 |
| Y | CHAN YUK LUN SIMON ET AL: "Bonding integrity of hybrid 18Ni300-17-4 PH steel using the laser powder bed fusion process for the fabrication of plastic injection mould inserts", THE INTERNATIONAL JOURNAL OF ADVANCED MANUFACTURING TECHNOLOGY, SPRINGER, LONDON, vol. 120, no. 7-8, 23 March 2022 (2022-03-23), pages 4963-4976, XP037819459, ISSN: 0268-3768, DOI: 10.1007/S00170-022-09004-7 [retrieved on 2022-03-23] * abstract; figures 2-3; tables 1-3 * * section 3.2.2; page 4966 * ----- -/-- | 1-4 | ADD. |

TECHNICAL FIELDS SEARCHED (IPC)

B22F
C21D
C22C
B33Y
B21D
B23P

The present search report has been drawn up for all claims

| Place of search | Date of completion of the search | Examiner |
|---|---|---|
| The Hague | 14 May 2025 | Aliouane, Nadir |

page 1 of 2

Europäisches
Patentamt
European
Patent Office
Office européen
des brevets

## EUROPEAN SEARCH REPORT

**Application Number**

EP 24 21 3623

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | KUCEROVÁ LUDMILA ET AL: "Hybrid parts produced by deposition of 18Ni300 maraging steel via selective laser melting on forged and heat treated advanced high strength steel", ADDITIVE MANUFACTURING, vol. 32, 1 March 2020 (2020-03-01), page 101108, XP055943031, NL ISSN: 2214-8604, DOI: 10.1016/j.addma.2020.101108 * abstract; figures 1-5; table 1 * ----- | 4 | C22C38/14 B22F3/24 C22C38/10 C22C33/02 B23P15/24 C22C38/08 |
| Y | WEI SIYUAN ET AL: "Effect of heat treatment on the microstructure and mechanical properties of 2.4 GPa grade maraging steel fabricated by laser powder bed fusion", ADDITIVE MANUFACTURING, ELSEVIER, NL, vol. 59, 3 October 2022 (2022-10-03), XP087200451, ISSN: 2214-8604, DOI: 10.1016/J.ADDMA.2022.103190 [retrieved on 2022-10-03] * abstract * * section 2.1-2.2; figures 1a,11b; table 1 * ----- | 1-3 | |

**TECHNICAL FIELDS SEARCHED (IPC)**

The present search report has been drawn up for all claims

| Place of search | Date of completion of the search | Examiner |
|---|---|---|
| The Hague | 14 May 2025 | Aliouane, Nadir |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    ...........................................................................

& : member of the same patent family, corresponding
   document

EPO FORM 1503 03.82 (P04C01)

## REFERENCES CITED IN THE DESCRIPTION

### Patent documents cited in the description

- KR 102002003 B1
- CN 113891956 A
- CN 109940163 A
- CN 116140650 A
- CN 108907095 A

### Non-patent literature cited in the description

- **B. MOONEY** ; **K. KOUROUSIS**. A Review of Factors Affecting the Mechanical Properties of Maraging Steel 300 Fabricated via Laser Powder Bed Fusion. *Metals*, 2020, vol. 10, 1273
- **H.E. PETERSEN** ; **B J. SAMPSON** ; **D.P. FAILLA JR.** ; **M.W. PRIDDY** ; **Z.B. MCCLELLAND**. The Variation of Mechanical Properties of M300 Maraging Steel Manufactured with Varying Process Parameters in Laser Powder Bed Fusion. *Solid Freeform Fabrication Symposium - An Additive Manufacturing Conference, Austin, Texas USA*, 2023
- **J. VISHWAKARMA** ; **K. CHATTOPADHYAY** ; **N.C. SANTHI SRINIVAS**. Effect of build orientation on microstructure and tensile behaviour of selectively laser melted M300 maraging steel. *Materials Science and Engineering: A*, 2020, vol. 798, 140130
- **E.W. HOVIG** ; **A.S. AZAR** ; **K. SOLBERG** ; **K. SØRBY**. An investigation of the anisotropic properties of heat-treated maraging steel grade 300 processed by laser powder bed fusion. *Int J Adv Manuf Technol*, 2021, vol. 114, 1359-1372
- **J. VISHWAKARMA** ; **K. CHATTOPADHYAY** ; **N.C. SANTHI SRINIVAS**. Effect of build orientation on microstructure and tensile behaviour of selectively laser melted M300 maraging steel. *Materials Science and Engineering*, 2020, vol. 798, 140130
- **S. KOLOMY** ; **J. SEDLAK** ; **J. ZOUHAR** ; **M. SLANY** ; **M. BENC** ; **D. DOBROCKY** ; **I. BARENYI** ; **J. MAJERIK**. Influence of Aging Temperature on Mechanical Properties and Structure of M300 Maraging Steel Produced by Selective Laser Melting. *Materials*, 2023, vol. 16, 977
- **N. ASNAFI** ; **J. RAJALAMPI** ; **D. ASPENBERG** ; **A. ALVEFLO**. Production Tools Made by Additive Manufacturing Through Laser-based Powder Bed Fusion. *Berg Huettenmaenn Monatsh*, 2020, vol. 165, 125-136
- **C.-P. JIANG** ; **A.A. MAIDHAH** ; **S.-H. WANG** ; **Y.-R. WANG** ; **T. PASANG** ; **M. RAMEZANI**. Laser Powder Bed Fusion of Inconel 718 Tools for Cold Deep Drawing Applications: Optimization of Printing and Post-Processing Parameters. *Materials*, 2023, vol. 16, 4707
- **H. FREIßE** ; **J. VORHOLT** ; **T. SEEFELD** ; **F. VOLLERTSEN**. Additive Manufacturing of a Deep Drawing Tool by Direct Laser Deposition. *Dry Metal Forming Open Access Journal*, 2015, vol. 1, 5-10
- **H. DARDAEI JOGHAN** ; **R. HÖLKER-JÄGER** ; **A. KOMODROMOS** ; **A.E. TEKKAYA**. Hybrid Additive Manufacturing of Forming Tools. *Automot. Innov.*, 2023, vol. 6, 311-323